# EUROPEAN PATENT APPLICATION

(11) **EP 1 241 559 A2**
(43) Date of publication of application: **18.09.2002**
(21) Application number: 02250482.3
(22) Date of filing: 24.01.2002
(51) Int. Cl.: G06F 3/033

(54) **Information entry method**

(30) Priority: 25.01.2001 JP 2001017687
(71) Applicant: Sony Computer Entertainment Inc., Tokyo 107-0052 (JP)
(72) Inventor: Takatsuka, Susumu, Sony Computer Entertainment Inc, Tokyo 107-0052 (JP); Miyaki, Satoru, Sony Computer Entertainment Inc, Tokyo 107-0052 (JP); Matsumoto, Shingo, c/o Computer Entertainment Inc, Tokyo 107-0052 (JP)
(74) Representative: DeVile, Jonathan Mark, Dr.

(57) **Abstract**

An information entry device is arranged to receive groups of information characters, to display each group so that each character contained therein is recognizable,and to display a group selected from the groups so that this group is distinguishable from other groups, when in a selection mode. This selection allows the transition of such a group selected in the group selection mode into an information selection mode, displays a character selected from such a group so as to be distinguishable from the other characters, and sets such a character selected in the information selection mode as a definable character. The information entry device defines an entry of such characters when a predetermined definitive instruction is issued in respect of such definable characters. This successfully improves time efficiency and operational efficiency in information entry, and allows simple and rapid information entry.

## Description

### BACKGROUND OF THE INVENTION

### 1. Field of the Invention

The present invention relates to an information entry method, a device used therefor, a computer-readable recording medium having recorded therein an information entry program, a program execution device and such information entry program, all of which are successfully applicable to display on two-dimensional screen such as on a television monitor device, and to information entering operation using an operational device for moving a cursor or the like displayed on such two-dimensional screen.

### 2. Description of the Related Art

For the case that a character is entered on a television screen during video game play or on a monitor screen of a personal computer, it has been a general practice to display an entire set of *kana* (Japanese syllabary) or alphabet, and to select desired letters therefrom.

A display style for the convenience of such *kana* entry is such that orderly arranging all *kana* characters from "a" to "n" typically according to systematic table of the fifty sounds of Japanese in which the all characters are contained in rows of the "a-series", "k-series", "s-series" and so on. A display style for the convenience of such alphabetic entry is such that orderly arranging all alphabets from "a" to "z" typically according to a predetermined rule. There is also a display style in which such *kana* characters or alphabetic characters appear on the screen in the same arrangement as that on a keyboard.

A well-known technique for selecting each character from those displayed on the screen is such that displaying a cursor on the screen, moving the cursor on a desired character, and operating a decision button or the like to thereby determine such character.

A large disadvantage as described below, however, resides in such conventional technique for selecting a desired character from a number of characters displayed on the screen typically using a cursor to thereby entry characters.

The conventional character entry technique places the same importance to all characters and thus displays all characters on the screen, so that it is sometimes time-consuming to move the cursor continuously from one character to another depending on which characters are to be entered in sequence. More specifically, for the case that desired characters to be entered in sequence are located apart, such as *kanas* "A" and "WA" on the systematic table of the fifty sounds of Japanese, or such as alphabets "Z" and "P" on the keyboard arrangement, moving the cursor over such distant characters is time-consuming, which degrades time efficiency of the character entry, and efficiency of the cursor operation.

One possible way for speedup of the cursor movement may be such that accelerating the cursor movement on the screen depending on the duration of operational time of the cursor (e.g., time duration of keeping the button for operating the cursor pressed down), and such technique is supposed to increase the moving speed of the cursor to a place close to the display sites of such desired characters. A problem however arises in such technique that although the cursor can swiftly be moved to approach the desired characters, the technique makes it difficult to finely adjust and precisely align the cursor just on such desired characters. Such fine adjustment may even be time-consuming, to thereby lower the time efficiency of the character entry and efficiency of the cursor operation.

### SUMMARY OF THE INVENTION

Various aspects and features of the present invention are defined in the appended claims.

The present invention is proposed to overcome the foregoing problems. Embodiments of the present invention can provide an information entry method, a device used therefor, a computer-readable recording medium having recorded therein an information entry program, a program execution device and such information entry program, all of which successfully improve time efficiency and operational efficiency in information entry, and allows simple and rapid information entry when the information entry is effected by selecting desired information such as characters displayed on a screen.

The present invention displays each of a plurality of groups, which respectively contains a plurality of information grouped according to a predetermined rule, so that each information contained in each group is recognizable; displays a group, selected in the group selection mode for allowing selection of such displayed group, so as to be distinguishable from other groups; makes such group selected in the group selection mode transit to the information selection mode for allowing selection of an information from such selected group; displays an information selected from such selected group in the information selection mode so as to be distinguishable from other information, and sets such information selected in the information selection mode as a definable information; and defines the entry of such information when a predetermined definitive instruction is issued in respect of such definable information.

That is, in the present invention, a plurality of characters or the like are grouped by a certain number or by categories; each character or the like contained in each group is displayed in a recognizable manner; a group is first selected to thereby make the characters or the like contained therein selectable; a character selected therefrom is set as a definable character; and entry of such definable character is defined when a definitive instruction for such character is issued by the user. Thus it is no more necessary to directly specify a plurality of characters displayed on the monitor screen, which successfully simplifies the character entry.

Other and further objects and features of the present invention will become obvious upon understanding of the illustrative embodiments about to be described in connection with the accompanying drawings or will be indicated in the appended claims, and various advantages not referred to herein will occur to one skilled in the art upon employing of the invention in practice.

### BRIEF DESCRIPTION OF THE DRAWINGS

The invention will now be described by way of example with reference to the accompanying drawings, throughout which like parts are referred to by like references, and in which:
Fig. 1 is a drawing showing a schematic configuration of an information entry system according to an embodiment of the present invention;
Fig. 2 is a block diagram showing a schematic configuration of an internal circuit of an entertainment device of the present embodiment;
Fig. 3 is a drawing showing an exemplary display of a character entry/display window displayed on a television monitor screen;
Fig. 4 is a drawing showing an exemplary display of a character entry/display window having displayed therein a help board;
Fig. 5 is a drawing showing an exemplary display of a text entry button in a normal display status;
Fig. 6 is a drawing showing an exemplary display of a text entry button pointed by a cursor;
Fig. 7 is a drawing showing an exemplary display of a text entry button in a state a desired palette is selected in a palette selection mode;
Fig. 8 is a drawing showing an exemplary display of a text entry button in a state the selection of a desired character is defined;
Fig. 9 is a drawing showing an exemplary display of a character entry/display window having displayed therein a small board;
Fig. 10 is a drawing showing an exemplary display of a character entry/display window having displayed therein a choice questionnaire on the text display area;
Fig. 11 is a drawing showing an exemplary display of a character entry/display window having displayed therein a help display area;
Fig. 12 is a chart for explaining data configuration in a content-distributional application program according to the present embodiment;
Fig. 13 is a flow chart showing an entire process flow of character entry out of various content-distributional application program of the present embodiment;
Fig. 14 is a flow chart showing a process flow through operating a text entry button on the character entry/display window;
Fig. 15 is a flow chart showing a process flow through operating a voiced sound/p-sound mark button on the character entry/display window;
Fig. 16 is a flow chart showing a process flow through operating a lower-case button on the character entry/display window;
Fig. 17 is a flow chart showing a process flow through operating a large/small board change button on the character entry/display window; and
Fig. 18 is a flow chart showing a process flow for displaying the help display area in the character entry/display window.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

### Information Entry System of the Present Embodiment

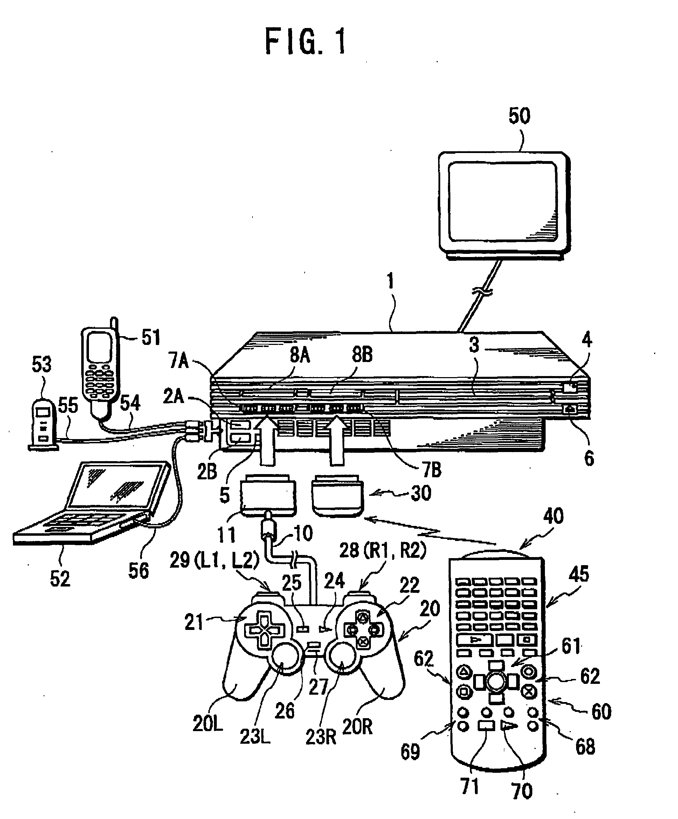

Fig. 1 shows a schematic configuration of an information entry system according to an embodiment of the present invention.

As shown in Fig. 1, an information entry system according to the present embodiment comprises an entertainment device **1,** which is one example of a program execution device of the present invention for executing a so-called video game or for reproducing movie or music recorded in optical disks; a controller **20** and an infrared remote controller **40** which are operational terminals connected to such entertainment device **1** and operated by a user; and a television monitor device **50** responsible for display of contents of the game or movie and sound output.

### Outline of Entertainment Device

The entertainment device **1** is provided with memory card slots **8A, 8B** to or from which a memory card, not shown, can be inserted or ejected; controller ports **7A, 7B** to or from which a connecter **11** of a cable **10** connected to the controller **20** or a photo-receiving unit **30** for receiving infrared signal sent from the remote controller **40** can be connected or disconnected; a disk tray **3** on which an optical disk such as DVD-ROM or CD-ROM are loaded; an open/close button **6** for opening/closing the disk tray **3;** an on/stand-by/reset button **4** for effecting power-on, stand-by or game resetting; an IEEE (Institute of Electrical and Electronics Engineers) 1394 connection terminal **5;** and two USB (Universal Serial Bus) connection terminals **2A, 2B.** Although not illustrated in the figure, there are also provided on the back surface of the entertainment device **1** a power switch, audio-visual output terminal (AV multi-output terminal), a PC card slot, an optical digital output terminal and an AC power input terminal.

The entertainment device **1** is designed to execute video games, to reproduce movie or music, and to execute entering operation of various information such as characters, symbols and images as described later based on a desired application program read out from optical disks such as CD-ROM or DCD-ROM or from other recording media such as semiconductor memory, or based on a desired application program downloaded through various communication lines (transmission media) such as telephone line, LAN, CATV circuit and communication satellite line, and also based on user's instruction through the controllers **20, 40.**

The entertainment device **1** shown in Fig. 1 can also store (save), for example, various game data generated during the execution of video games or various information such as thus-entered characters, symbols and images into a memory card (not shown) inserted into the memory card slots **8A, 8B.**

The entertainment system **1** also allows connection, for example, of a personal digital assistant **51** including a mobile phone, a personal computer **52** of desk-top type or portable-type, and a terminal adapter **53** for allowing direct connection to a communication line, via dedicated connection cables **54, 56** and **55,** respectively, to for example the USB connection terminals **2A** or **2B.** It should now be noted for the entertainment device **1** according to the present embodiment that the terminal to which the personal digital assistant **51,** personal computer **52** and terminal adapter **53** can be connected is not limited to the foregoing USB connection terminals **2A, 2B,** and may be the foregoing IEEE 1394 connection terminal **5,** controller ports **7A, 7B** or PC card slot, not shown, provided on the back side of the enclosure.

### Outline of Controller

while the controller **20** is generally used by an operator (user) mainly to play video games, it is also available for selection of program menu and entry of various information such as characters, symbols and images in a content-distributional application program having a function which allows entry of characters or other information as described later.

The controller **20** has a left grip portion **20L** held as being wrapped by the left palm of an operator (user); a right grip portion **20R** held as being wrapped by the right palm; left operational portion **21** and a right operational portion **22** operable by the individual thumbs of the left and right hands while holding the grip portions **20L, 20R,** respectively; a left analog operational portion **23L** and a right analog operational portion **23R** operable again by the left and right thumbs, respectively, in an analog manner (joy stick operation); a first left press button **29 (L1)** and a second left press button **(L2)** located thereunder, although not shown, which are typically operable by the left forefinger and the left middle finger, respectively; and a first right press button **28 (R1)** and a second right press button **(R2)** located thereunder, although not shown, which are typically operable by the right forefinger and the right middle finger, respectively.

The left operational portion **21** is provided with "upward", "downward", "leftward" and "rightward" directional keys used by the user for moving for example a cursor or a game character displayed on the screen upward, downward, leftward or rightward. The "upward", "downward", "leftward" and "rightward" directional keys are also capable of specifying synthetic directions, so that pressing the "upward" directional key together with the "rightward" directional key can issue an instruction for moving obliquely right upward. The same will apply to the other directional keys, and pressing, for example, the "downward" directional key together with the "leftward" directional key can issue an instruction for moving obliquely left downward.

The right operational portion **22** is provided with four instruction buttons ("Δ", "□", "×" and "O" buttons), which are assigned with various functions differed by game application programs. More specifically, for the case of a content-distributional application program having an information entry function for characters or so as described later in the present embodiment, the "○"/"×" buttons out of four such instruction buttons is assigned with a user-defined function such as ON/OFF instruction for virtual button pointed by the cursor, selection/canceling of menu item on the screen, decision/deletion of entered character and cancellation/execution of editing. For the case of content-distributional application program having entry function of characters or other information according to the present embodiment described later, the "Δ" button is typically assigned with a function allowing the user to prompt conversion of entry made in *kana* or Roman character into *kanji* (Chinese character). The "□" button is assigned with a function allowing the user to prompt non-conversion of entered characters. Note that such functional assignment is only one example, and the present invention allows assignment of various functions depending on application programs without being limited to the above example.

The left analog operational portion **23L** and the right analog operational portion **23R** are designed to keep upright posture (not-inclined posture) and remain in such position (referential position) when they are not inclined for operation, but when they are inclined for operation, a coordinate value on an X-Y coordinate is detected based on the amount and direction of the inclination from the referential position, and such coordinate value is supplied as an operational output to the main unit **1**. Using such left analog operational portion **23L** and the right analog operational portion **23R** can effect the same functions with the foregoing "upward", "downward", "leftward" and "rightward" directional keys.

The controller **20** is also provided with a mode selection switch **26** for activating (analog operation mode) or deactivating (digital operation mode) the function of the left and right operational portions **21,22** and the left and right analog operational portions **23L, 23R,** a light indicator **27** for informing, typically through illumination of LED (light emitting diode), the player of a currently selected operational mode, a start button **24** for prompting the start and temporal stop of applications, and a selection button **25** for issuing instruction for allowing the television monitor device **50** to display thereon a software keyboard mode window described later. When the analog operational mode is selected using the mode selection switch **26**, the light indicator **27** is controlled to light on to thereby activate the left and right analog operational portions **23L, 23R,** and when the digital operation mode is selected, the light indicator **27** is controlled to turn off to thereby deactivate the left and right analog operational portions **23L, 23R.**

When the various buttons and operational portions provided on the controller **20** are operated by the user, the controller **20** generates signals corresponded to such operation, and sends such operational signals to the entertainment device **1** through the cable **10**, connector **11** and controller port **7.**

The controller **20** is still also provided with a vibration generation mechanism within the left and right grip portions **20L, 20R**, in which a weight decentered in respect of the axis of rotation of a motor is rotated by such motor to thereby generate vibration. The vibration generation mechanism is activated as being prompted by the entertainment device **1,** and thus can apply vibration to the user's hands.

### Outline of Infrared Remote Controller

While the infrared remote controller **40** is generally used by an operator (user) mainly to reproduce DVD or so, it is also available in the present embodiment, similarly for the case with the controller **20,** for execution of game application programs, or selection of program menu and entry of various information such as characters, symbols and images in a content-distributional application program having a function which allows entry of characters or other information as described later.

The infrared remote controller **40** mainly comprises a DVD operational portion **45** and an application controller portion **60**.

While indication of reference numerals in the drawing and detailed description of the individual buttons of the DVD operational portion **45** are not given, the major buttons include an audio button used for switching DVD sound, a program button used for reproducing video or the like in a desired order, an angle button for switching angle of displayed image, a repeat button used for activating repeated reproduction, a sub-title button used for switching superimposed dialogue, a clear button for canceling the entry, a slow button used for slow reproduction, a scan button used for searching a desired scene, a preview/next button used for scrolling to the previous screen or next screen, a play button for designating reproduction, a title button for displaying title menu, a display button used for displaying control menu screen, a shuffle button for designating shuffling reproduction, numeral buttons used for selecting numbered items displayed on the screen, a time button use for displaying reproduction time or so, a DVD menu button used for displaying DVD menu and a return button used for returning to the previous selected screen.

The application controller portion **60** has buttons and keys basically similar to those provided on the controller **20** except for the left and right analog operational portions **23L, 23R.** That is, the application controller portion **60** has provided thereon first left arid second left buttons **69 (L1, L2)** which correspond to the first left and second left press buttons **29** on the controller **20**, first right and second right buttons **68 (R1, R2)** which correspond to the first right and second right press buttons **28** on the controller **20,** "Δ", "□", "×" and "○" buttons corresponded to the individual buttons on the right operational portion **22** of the controller **20**, "upward", "downward", "leftward" and "rightward" directional keys corresponded to the individual keys on the left operational portion **21** of the controller **20,** a start button **70** and a select button **71.**

When the various buttons and operational portions provided on the infrared remote controller **40** are operated by the user, the infrared remote controller **40** generates infrared signals corresponded to such operation, and sends such infrared signals to the entertainment device **1** via the photo-receiving unit **30.**

### Internal Configuration of Entertainment Device

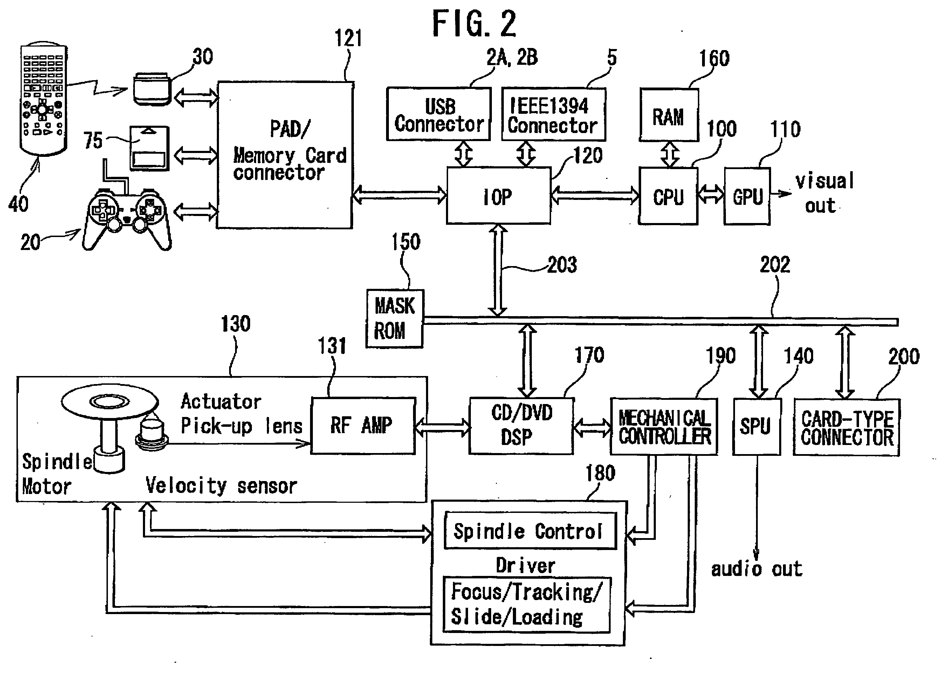

Outline of the internal circuit configuration of the entertainment device **1** according to the present embodiment will be described referring to Fig. 2.

The entertainment device **1** of the present embodiment basically has a main CPU **100** for controlling signal processing or internal components based on various programs such as content-distributional application program and game application program which allow entry of information such as characters according to the embodiment described later, a graphic processor unit (GPU) **110** responsible for image processing, an IO processor (IOP) **120** responsible for interfacing between the external and the internal of the device, and for processing for ensuring compatibility with lower devices, an optical disk reproduction section **130** responsible for reproducing an optical disk such as DVD and CD which stores application programs or multi-media data, a main memory (RAM) **160** having function as a work area of the CPU **100** or a buffer which temporarily stores data read out from the optical disk, a MASK ROM **150** storing operating system programs to be executed mainly by the CPU **100** and IOP **120**, and a sound processor unit **140** (SPU) responsible for sound signal processing.

The entertainment device **1** still also has a CD/DVD digital signal processor **170** (DSP) responsible for error correction processing (CIRC processing) of reproduction output from a CD or DVD supplied via an RF amplifier **131** of the optical disk reproduction section **130**, and responsible for expansion decoding of compressed coded data; a driver **180** and a mechanical controller **190** responsible for controlling rotation of a spindle motor of the optical disk reproduction section **130,** focusing/tracking of an optical pick-up, and loading operation of the disk tray; and a card-type connector **200** (PC card slot) for connecting a communication card or an external hard disk drive.

The individual sections are connected with each other mainly through bus lines **202, 203.** The main CPU **100** and the graphic processor unit **110** are connected through a dedicated bus line, and the main CPU **100** and the IOP **120** are connected through a sub-bus line (SBUS). The IOP **120** and the CD/DVD digital signal processor **170**, MASK ROM **150**, sound processor unit **140** and card-type connector **200** are also connected through the SBUS.

The main CPU **100** controls the entire operations of the entertainment device **1** by executing the operating system program for the main CPU stored in the MASK ROM **150.** The main CPU **100** is also designed to control operation on such main unit **1** through executing various application programs, including the application program according to the present embodiment, loaded onto the main memory **160** after read out from the optical disk such as a CD-ROM or DVD-ROM or downloaded via a communication network.

The IOP **120** executes the operating system program for the IOP stored in the MASK ROM **150,** to thereby control data input/output to or from a PAD/memory card connector **121** which controls signal sent/received to or from the controllers **20, 40** and memory card **75,** data input/output to or from the USB connection terminals **2A, 2B,** data input/output to or from the IEEE 1394 connection terminal **5,** data input/output to or from the PC card slot, and conversion of data protocol. The MASK ROM **150** is designed to store device IDs of the controller **20** and photo-receiving unit **30** connected to the controller ports **7A, 7B,** memory card **75** inserted into the memory card slots **8A, 8B,** and the PC card inserted into the card-type connector (PC card slot) **200.** The IOP **120** communicates with various devices such as the controllers **20, 40** and memory card based on the device IDs thereof.

The graphic processor unit **110** performs drawing based on draw instruction issued by the CPU **100,** and such drawn image is stored in a frame buffer not shown. The graphic processor **110** also has a function as a geometry transfer engine responsible for processing such as coordinate transfer. That is, for the case that various application programs stored in the optical disk are such as those using so-called three-dimensional (3D) graphic, the graphic processor unit **110,** as a geometry transfer engine, constructs a virtual three-dimensional object with a set of triangle polygons, and then performs various calculations for generating an image possibly obtained by photographing such three-dimensional object with a virtual camera, that is perspective conversion for rendering (i.e., calculation of coordinate values of the vertexes of the individual polygons composing a three-dimensional image projected on to a virtual camera screen). Thus the graphic processor unit **110** performs rendering of the three-dimensional object on the frame buffer based on an instruction from the CPU **100,** while using if necessary the geometric transfer engine, to thereby generate an image and output video signals corresponding to such generated image.

The sound processor unit **140** has an ADPCM decoding function for reproducing sound data which were processed by adaptive predictive coding, a reproducing function for reproducing and outputting audio signals such as effective sounds by reproducing waveform data stored in a sound buffer built in such unit **140** or externally attached thereto, and a modulation function for modulating and reproducing such waveform data stored in the sound buffer. The sound processor unit **140** thus provided with such functions can be used as a so-called sampling sound source, which can generate audio signals such as those of music sounds and effective sounds from waveform data stored in the sound buffer based on instructions from the main CPU **100.**

In thus-composed entertainment device **1,** the operating system programs for the main CPU and the IOP are respectively read out from the MASK ROM **150** when the device **1** is powered on, and are then respectively executed in the main CPU **100** and the IOP **120.** Thus the main CPU **100** can totally control the individual sections of the entertainment device **1.** The IOP **120** controls signal input/output typically in respect to the controllers **20, 40** and memory card **75.** When the operating system programs are executed, the main CPU **100** then performs initialization processing including operational check, controls the optical disk reproduction section **130** to thereby read out an application program stored in such optical disk, loads the program into the main memory **160**, and executes such application program. By such execution of the application program, the main CPU **100** controls the graphic processor unit **110** and sound processor unit **140** according to the user's instruction received through the IOP **120** from the controllers **20, 40,** to thereby control display of images or generation of effective sound and music sound. The same will apply to the case that movies or so stored in an optical disk are reproduced on the entertainment device **1** of the present embodiment, where the main CPU **100** controls the graphic processor unit **110** and sound processor unit **140** according to the user's instruction received through the IOP **120** from the controllers **20, 40,** to thereby control display of images or generation of effective sound and music sound of the movie.

### Outline of Application of Present Embodiment

As one embodiment of the information entry program of the present invention, an content-distributional application program having a function for entering various information including characters is exemplified, where the outline of such content-distributional application program will first be briefed, and the function for entering information such as characters of such content-distributional application program will then be detailed. It should now be noted that the information entry function described herein is by no means limited to the content-distributional application program described below, and is applicable to any applications such that they allow information entry through selection of characters or the like displayed on the screen.

The content-distributional application program of the present embodiment is such that arranging programs using program information sent from a network server to the entertainment device **1** of the individual users, which can be accomplished by connecting the device **1** to a network such as internet via the personal digital assistant **51**, personal computer **52** or terminal adapter **53**; information generated according to a program read out from an optical disk or downloaded through the network by the entertainment device **1**; and information already stored in the past, and such that displaying the arranged program on the screen of the television monitor device **50** connected to the entertainment device **1**.

Representative information generated by the entertainment device **1** according to a program reproduced from the optical disk or downloaded through the network include information of basic background image for content image displayed on the screen of the television monitor device **50**, image information of figures and various objects appear in the content, image information of various menu items and windows displayed in the content, text information of stereotyped sentence, and sound information including stereotyped conversation sound and BGM.

On the other hand, representative information sent by the server through the network to the entertainment device 1 include scenario information expressing broadcasting time or broadcasting order of the program, special background image other than basic ones, control information used for controlling timing of display of figures and objects on the screen and for controlling movement thereof, information for displaying on the screen novel figures or objects other than those generated by the entertainment device **1,** question sentence of the entertainment device **1** to the user or other contributed sentences by other users, text information for displaying comment sentence on the screen and display control information therefor, and sound control signals for generating non-stereotyped conversation sound or BGM.

### Outline of Information Entry Function of Present Embodiment

The content-distributional application program of the present embodiment has an information entry function allowing information entry by selecting characters or other information displayed on the television monitor screen through cursor pointing.

The content-distributional application program of the present embodiment employs a user interface in which a plurality of information including characters are preliminarily grouped according to a predetermined rule such as by certain numbers or categories, and the user is allowed to select information to be entered by first selecting and deciding a group to which such information belongs, and then selecting and defining the desired information from those contained in such selected group. This successfully improves time efficiency and operational efficiency in the entering operation of characters or other information, and allows simple and rapid information entry.

According to the present embodiment, the user interface is successfully provided so as to allow the user to recognize at a glance how many and what category of information belongs to each group, what kind of information belongs to each group, which group belongs to the selected group in each group, what information is selectable in the selected group, and which information is actually selected from the selected group.

### Specific Example of Information Entry of Present Embodiment

A specific and detailed process flow of information entry in the application program according to the present embodiment will be explained referring to an exemplary case in which the user of the entertainment device enters a contribution sentence in the broadcasted program, enters an answer sentence to a question sent from the server and makes character entry into a memo pad. The example described below deals with entry in Japanese language, where the contribution sentence and answer sentence entered by the user in a form of text information are sent to the server, and the server distributes such contribution sentence to other entertainment devices **1** as necessary, or sums up a service points according to the contribution or answer to thereby gives a present to the user corresponding to such service points.

### Outline of Character Entry/Display Window

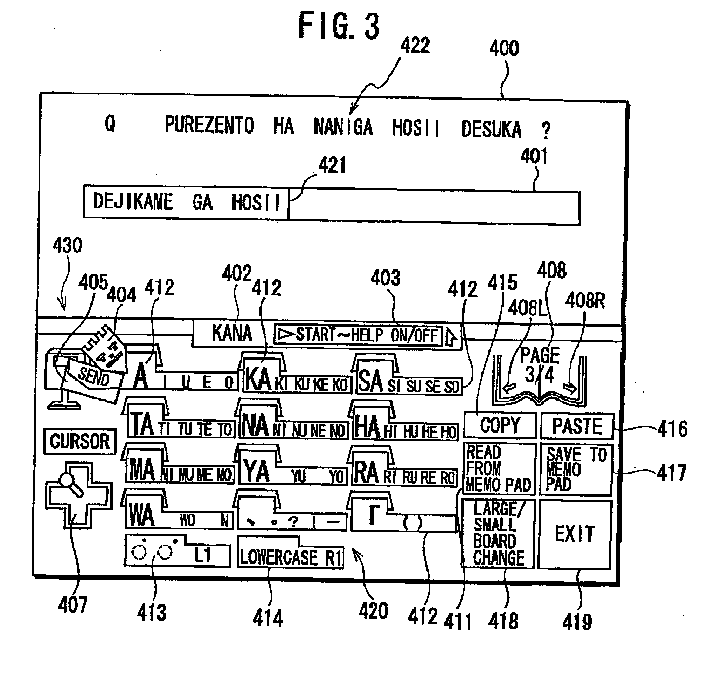

In the present embodiment, grouping of kana characters and so forth for effecting entry in Japanese language is given by series such as the "a-series", "k-series", "s-series" and so on. Fig. 3 shows a specific example of a character entry/display window **400** displayed on the television monitor screen based on the information entry function of the content-distributional application program of the present embodiment.

The character entry/display window **400** shown in Fig. 3 is displayed on a part or entire portion of the television screen, and mainly comprises a text display portion **422** and a software keyboard portion **430,** and has a cursor **404** displayed therein. The cursor **404** is designed so as to be freely movable at least over the software keyboard portion **430** in response to operational signals sent from the controller **20** or infrared remote controller **40.** Of course, the cursor **404** can be designed to move over the text display portion **422.**

The text display portion **422** displays text sentences such as question sentence or comment sent from the server, or contribution sentence contributed by other user, all of which cannot be altered by the user of the entertainment device **1**, and an entry edit portion **401** in which the user can enter characters and edit the text.

The entry edit portion **401** displays characters entered by the user using the software keyboard portion **430** or read out from contents of the memo pad already saved, and a text cursor **421** (which differs from the foregoing cursor **404)** which indicates the position of character entry or editing.

In the example shown in Fig. 3, the text display portion **422** contains a text sentence of "Q PUREZENTO HA NANIGA HOSII DESUKA?", which means "What do you want for present?" in Japanese, as a question sentence sent from the server, and the entry edit portion **401** contains a text sentence of "DEJIKAME GA HOSII.", which means "I want a digital camera." in Japanese, entered by the user and the text cursor **421.** Of course, the text display portion **422** may sometimes contain only a text sentence which cannot be edited or altered by the user, or only the entry edit portion **401.**

The software keyboard portion **430** is provided with a text entry buttons **412,** which are virtual buttons used for entering characters into the entry edit portion **401,** and are grouped by the individual series of the "a-series (A, I, U, E, 0)", "k-series (KA, KI, KU, KE, KO)", "s-series (SA, SI, SU, SE, SO)" and so on, and by symbols frequently used in the character entry such as " 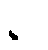 ", "_{°}", "?", "!", "(" and ")"; a voiced sound/p-sound mark button **412** for adding voiced sound mark or p-sound mark to the characters (that is, entering characters having voiced sound mark or p-sound mark); a lowercase button **414** for converting the characters into lowercase characters (that is, entering lowercase characters); and a text cursor operational stick **407** used for moving the text cursor **421** in the entry edit portion **401** and for scrolling the display on the text display portion **422.**

The software keyboard portion **430** further contains copy button **415** used for "copying" characters or so and a paste button **416** used for "pasting" characters or so, both of which are virtual buttons used for text editing; a save button **417** for prompting saving of the entered text. sentence in the memo pad; a read button **411** for prompting read-out of text sentence already saved for example in the memo pad; and a page button **408** used for displaying, for the case the information to be displayed in the text display portion **422** extends over two or more pages, the number of the current page and used also for opening a desired page. The page button **408** is provided with page turning direction arrow marks **408L, 408R** for designating either leftward or rightward (or upward or downward) direction of the page turning, where operating a predetermined button ("O" button, for example) on the controller **20** or infrared remote controller **40** while pointing either of such page turning direction arrow marks **408L, 408R** with the cursor **404** activates the page turning.

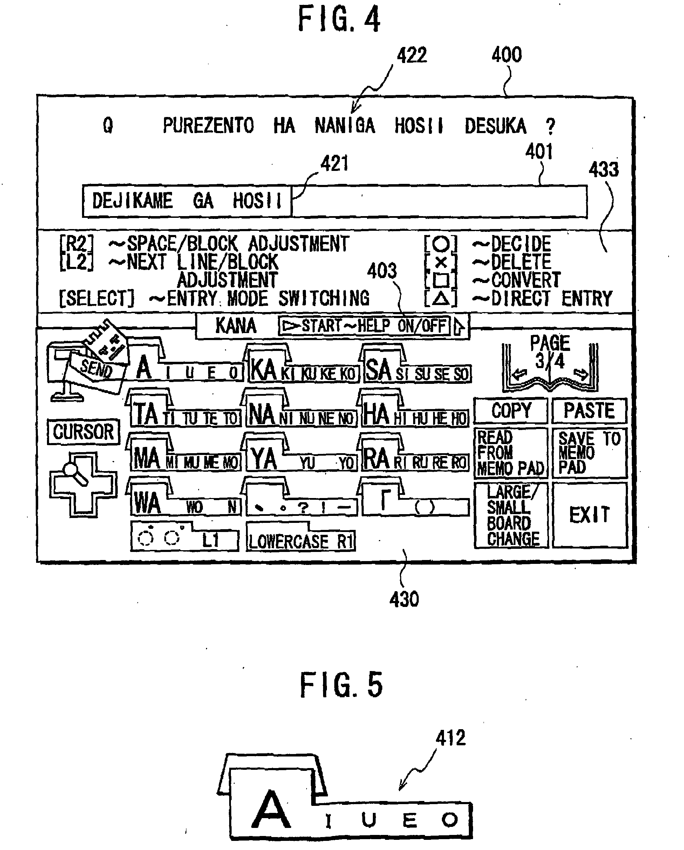

The software keyboard portion **430** still further contains an entry mode display portion **402** indicating the current character entry mode out of *kana*/*katakana* (the square form of *kana*)/alphabet/numeral & symbol; a board change button **418** for prompting switching of size of the software keyboard portion as described later; a send button **405** used for sending prepared contribution sentence, answer sentence or text sentence read out from the memo pad to the server; an exit button **419** used for exiting from the display on the character entry/display window **400;** and a help board correspondence display portion **403** indicating whether the ON/OFF instruction for the display of a help board **433** shown in Fig. 4, which contains explanation on that how to use the character entry/display window **400** and software keyboard portion **430** and on functions of the individual buttons, is corresponded with a predetermined button on the controller **20** or infrared remote controller **40** (e.g., start button **24**), and indicating whether the display mode of the help board **403** is in ON state or OFF state. In the present embodiment, the character entry mode of *kana*/*katakana*/alphabet/numeral & symbol can sequentially be toggled through operation of a predetermined button on the controller **20** or infrared remote controller **40** (e.g., select button **25).** The help board **433** is typically displayed on the upper portion of the software keyboard portion **430,** which is designed to simply display the various buttons provided on the controller **20** or infrared remote controller **40** and functions assigned thereto.

### Specific Explanation on Individual Buttons on Character Entry/Display Window

### Explanation on Text Entry button

Functions of the principal buttons out of the individual buttons provided on the character entry/display window **400** will be explained referring to a specific example.

In the normal display status shown in Fig. 5, the text entry button **412** has displayed therein a character which most characteristically represents the group in a large size, while keeping the other characters in the same group in a small size, so as to allow the user to recognize at a glance what characters belong to the group. Now in the description below, a display area for the individual characters in the text entry button **412** is specifically referred to as palette.

For the case that the individual characters in the order of the fifty sounds of Japanese are grouped by series such as the "a-series", "k-series'", "s-series" and so on in the present embodiment, the palette of the top character in each series (e.g., "A" for the "a-series") is displayed in a larger size while keeping the palette for the other characters (e.g., "I, U, E, O" for the "a-series") smaller, which allows the user to readily recognize that what series is assigned to the group (the "a-series" herein) and to recognize at a glance the individual characters contained in such group ("A, I, U, E, O" herein). Of course, a character displayed in a larger size in each group is not limited to the top character, and may be other characters.

As is clear from the software keyboard portion **430** shown in Fig. 3, the text entry buttons **412** grouped by the series such as the "a-series", "k-series", "s-series" and so on are aligned according to a predetermined order. One possible example of the order of the alignment of the individual text entry buttons **412** is such that found in a so-called mobile phone, in which the numeric keys are sequentially assigned with the fifty sounds. Adopting such order of the alignment similarly to the numeric keys of the mobile phone will successfully provide a user interface which is friendly to the user who has accustomed to character entry using the mobile phone.

To select a desired character (palette) from each text entry button **412** using the software keyboard portion **430** having the individual text entry button **412** aligned in a predetermined order, and also using the cursor **404,** first the cursor **404** is operated to point a desired text entry button **412** (group selection).

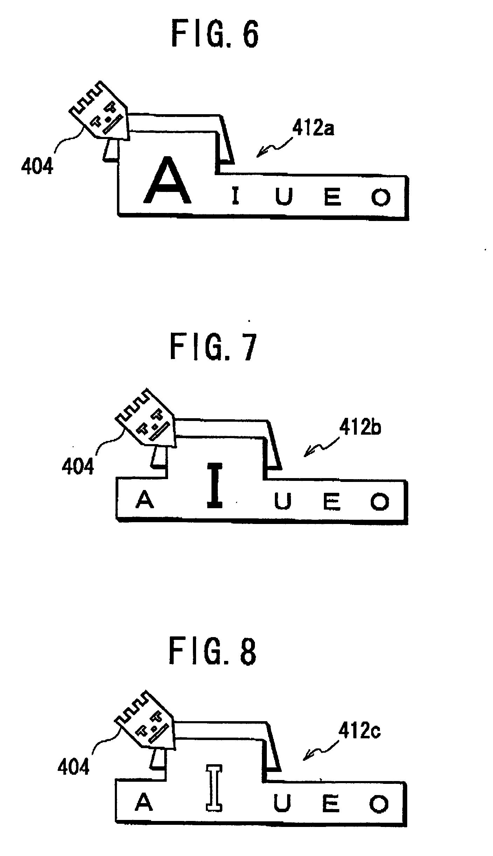

In the present embodiment typically shown in Fig. 6, the text entry button **412a** pointed by the cursor **404** is displayed in an entirely enlarged manner in a predetermined magnification factor (e.g., 1.2 times) as compared with the other text entry buttons **412.** That is, in the present embodiment, displaying the text entry button **412a** pointed by the cursor **404** in a size larger than that of the other text entry buttons **412** allows the user to readily recognize which text entry button is currently selected.

Next, when the user operates a predetermined button (e.g., the directional key or left analog operational portion) on the controller **20** or infrared remote controller **40,** the pointed text entry button **412** is brought into a state in which the palette of the individual characters is selectable (palette selection mode). In an exemplary case shown in Fig. 7, pointing a palette for "I" in the text entry button **412b** of the "a-series" will enlarge the palette for "I", while the palette for "A", which had been displayed in a enlarged manner as shown in Fig. 6, will be displayed in a smaller size similarly to those for "U, E, O".

In the present embodiment, it is also allowable to effect pointing of a palette of a desired character in the text entry button **412b** by preparing a separate palette selection pointer (not shown) capable of moving only over the text entry button and by moving such palette selection pointer using the directional keys or left analog operational portion.

The text entry button **412** of the "y-series ("YA, YU, YO")" has palettes to which no characters are assigned (i.e., blank palettes found between "YA" and "YU", and between "YU" and "YO"). In the palette selection mode of the present embodiment, such blank palettes are skipped without being pointed.

When a leftward directional instruction is given using the directional key or left analog operational portion despite the leftmost (top) palette in a certain text entry button **412** is pointed, the pointing jumps to the rightmost (last) palette in the same text entry button **412.** Similarly, when a rightward directional instruction is given using the directional key or right analog operational portion despite the rightmost (last) palette in a certain text entry button **412** is pointed, the pointing jumps to the leftmost (top) palette in the same text entry button **412.** More specifically, requesting a leftward movement while pointing the palette for "A" will result in the pointing at the palette for "O", and conversely, requesting a rightward movement while pointing the palette for "○" will result in the pointing at the palette for "A".

After the pointing of the palette of a desired character in the text entry button **412** is made, such character in the palette can be defined by pressing a predetermined button ("○" button for example) on the controller **20** or infrared remote controller **40.** In an exemplary case shown in Fig. 8 in which selection of character "I" in the text entry button **412c** is defined, such character "I" is displayed in open (outlined) style so as to be distinguishable from the other characters. This allows the user to confirm that the selection and definition of character "I" was completed.

Upon completion of the selection of a desired character, the initial state of the palette selection mode in the same text entry button **412** is recovered.

Further pressing, for example, a predetermined button ("×" button for example) on the controller **20** or infrared remote controller **40** will make the display state recovered to the normal state (a state of group selection mode) in which any text entry button **412** in the software keyboard portion **430** is selectable.

Of course, pressing the "×" button while any of the text entry button **412** being pointed but no selection nor definition of any character being made also recovers the normal display state.

As has been described in the above, in the present embodiment, entry of a desired character is made in such a way that a text entry button **412** in which a desired character is contained is first selected from those grouped in the software keyboard portion **430,** where pointing of such text entry button **412** makes it displayed in an enlarged manner, and the palette of such desired character is then pointed by operating the directional keys or left analog operational portion. So that it is no more necessary to finely adjust the landing of the cursor **404** as compared with the case a desired character is directly pin-pointed by operating the cursor **404,** which successfully ensures facile and rapid entry of a desired character.

### Explanation on Voiced Sound/P-Sound Mark

Functions of a voiced sound/p-sound mark button **413** provided in the software keyboard portion **430** will be explained referring to an exemplary display.

In the present embodiment, the individual characters having voiced sound/p-sound marks are not grouped unlike the characters contained in each text entry button **412** indicated by a reference numeral **420,** and instead, a selected character in either text entry button **412** is converted into a character with such voiced sound/p-sound mark according to ON operation of the voiced sound/p-sound mark button **413,** to thereby accomplish entry of a character with a voiced sound/p-sound mark.

In the present embodiment, the text entry button **412** is first brought into a palette selection mode as described in the above, a palette of a desired character within such text entry button **412** is pointed, such character is entered by pressing a predetermined button ("○" button for example) on the controller **20** or infrared remote controller **40,** the voiced sound/p-sound mark button **412** is pointed by the cursor **404,** and the "○" button is pressed again, to thereby convert the character selected from the text entry button **412** into a character having a voiced sound/p-sound mark (entry of a character having a voiced sound/p-sound mark). Since the first left press button **(L1)** on the controller **20** or infrared remote controller **40** is available as a short-cut button for allowing conversion into a character having a voiced sound/p-sound mark in the present embodiment, the user can convert the selected character into a character having a voiced sound/p-sound mark simply by effecting ON operation of such first left press button after such character is entered.

That is, according to the present embodiment, addition of a voiced sound/p-sound mark to a character (conversion into a character having a voiced sound/p-sound mark) is available only when the text entry button **412** is brought into the palette selection mode, the target character is not defined yet (before operation for entering the next new character is started), and the target character is such that attachable with a voiced sound/p-sound mark (characters permissible for the conversion into those having voiced sound/p-sound marks).

It is to be understood that the characters permissible for the conversion into those having voiced sound/p-sound marks are those in the "k-series (KA, KI, KU, KE, KO)", "s-series (SA, SI, SU, SE, SO)", "t-series (TA, TI, TU, TE, TO)" and "h-series (HA, HI, HU, HE, HO)". The characters in the "k-series", "s-series" and "t-series" are attachable with a voiced sound mark, and converts to the character "GA, GI, GU, GE, GO", "ZA, ZI, ZU, ZE, ZO" and "DA, DI, DU, DE, DO", respectively. On the other hand, the characters in the "h-series" are attachable with both of a voiced sound mark and a p-sound mark, and converts to the character "BA, BI, BU, BE, BO" and "PA, PI, PU, PE, PO", respectively. So that conversion of a character which cannot have a voiced sound/p-sound mark into a character having such voiced . sound/p-sound mark will never occur even if such conversion is requested. In the present embodiment, any request of the conversion of the characters not aimed at being attached with voiced sound/p-sound marks will result in display of a predetermined error message ("Your character is not convertible.", for example) for the user.

Addition of a voiced sound/p-sound mark (conversion into a character having a voiced sound/p-sound mark) through ON operation of the voiced sound/p-sound mark button **413** or first left press button **(L1)** will be explained hereinafter referring to a specific example.

When a voiced sound character "DA" is to be entered, the text entry button **412** for the "t-series" is pointed by the cursor **404,** the palette of "TA" within such text entry button **412** for the "t-series" is pointed, and "TA" is entered by pressing the "○" button. Next in a state before a new character entry is made, pointing the voiced sound/p-sound mark button **413** and pressing the "○" button or first left press button **(L1)** converts "TA" into "DA". Pressing the "○" button or first left press button **(L1)** again converts "DA" into "TA". That is, the conversion between "TA" and "DA" is effected in a toggled manner in the present embodiment.

On the other hand, when character "HA" is to be converted into characters having voiced sound/p-sound marks, the text entry button **412** for the "h-series" is pointed, the palette of "HA" within such text entry button **412** for the "h-series" is pointed, and "HA" is entered by pressing the "○" button. Next in a state before a new character entry is made, pointing the voiced sound/p-sound mark button **413** and pressing the "○" button or first left press button **(L1)** converts "HA" into "BA". Further pressing the "○" button or first left press button **(L1)** converts "BA" into "PA". Still further pressing the "○" button or first left press button **(L1)** converts "PA" into "HA". That is, the conversion of the individual characters in the "h-series" into characters having voiced sound/p-sound marks is effected in a toggled manner from an intact character via a character having a voiced sound mark to a character having a p-sound mark.

### Explanation on Lowercase Button

Functions of a lowercase button **414** provided in the software keyboard portion **430** will be explained referring to an exemplary display.

In the present embodiment, similarly to the characters attachable with voiced sound/p-sound marks, also the lowercase characters are not grouped unlike those contained in each text entry button **412,** and instead, a selected character in either text entry button **412** is converted into a lowercase character according to ON operation of the lowercase button **414,** to thereby accomplish entry of a lowercase character.

Similarly to the case for entering the foregoing voiced sound/p-sound characters, entry of lowercase character in the present embodiment can be made in such a way that the text entry button **412** is first brought into a palette selection mode, a palette of a desired character within such text entry button **412** is pointed, the entry of such character is determined by pressing the "○" button, the lowercase button **414** is pointed by the cursor **404,** and the "○" button is pressed again, to thereby convert the character selected from the text entry button **412** into a lowercase character (entry of a lowercase character). Similarly to the case for entering the foregoing voiced sound/p-sound characters, the first right press button **(R1)** can be used as a short-cut button for allowing conversion into a lowercase character.

That is, according to the present embodiment, conversion of a character grouped in the text entry button **412** into a lowercase character is available only when the text entry button **412** is brought into the palette selection mode, the target character is not defined yet (before operation for entering the next new character is started), and the target character is such that expressible in the lowercase (characters permissible for the conversion into lowercase ones).

It is to be understood that the characters permissible for the conversion into lowercase characters are the individual characters in the "a-series" and "y-series", "TU" in the "t-series", and "WA" in the "w-series". That is, standard characters "A, I, U, E, O" in the "a-series" can be converted into "a, i, u, e, o", "YA, YU, YO" in the "y-series" can be converted into "ya, yu, yo", "TU" into "tu", and "WA" into "wa". Conversion of a character which cannot be available in the lowercase into such lowercase character will never occur even if such conversion is requested. In the present embodiment, any request of the conversion of the characters not aimed at being converted into a lowercase characters will result in display of a predetermined error message ("Your character is not convertible.", for example) for the user.

Conversion into a lowercase character through ON operation of the lowercase button **414** will be explained hereinafter referring to a specific example.

When a lowercase character "a" is to be entered, the text entry button **412** for the "a-series" is pointed by the cursor **404,** the palette of "A" within such text entry button **412** for the "a-series" is pointed, and "A" is entered by pressing the "○" button. Next in a state before a new character entry is made, pointing the lowercase button **414** and pressing the "○" button converts "A" into "a". Pressing the "○" button again converts "a" into "A". That is, the conversion between the standard character and lowercase character is effected in a toggled manner in the present embodiment.

### Explanation on Board Change Button

Functions of a board change button **418** provided in the software keyboard portion **430** will be explained referring to an exemplary display.

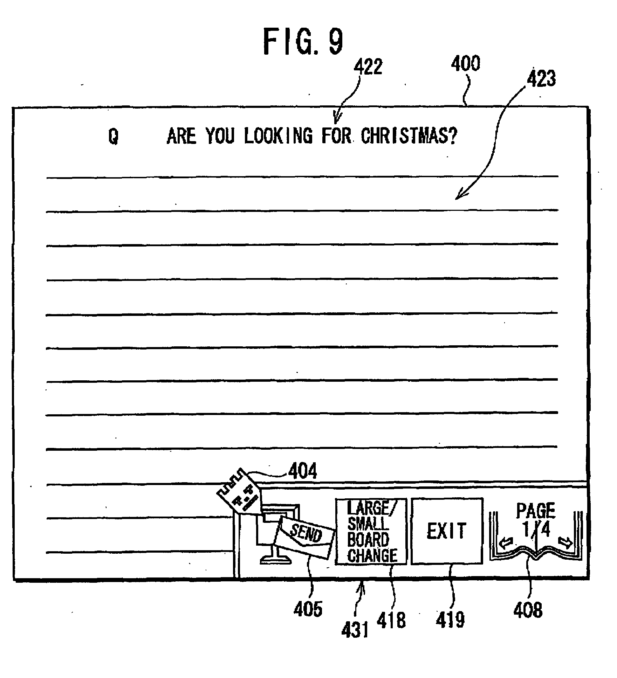

In the present embodiment, the size of the software keyboard portion **430** can be switchable through ON/OFF operation of the board change button **418.** Reducing the size of the software keyboard portion **430** shown in Fig. 3 into a small board **431** as shown in Fig. 9 can successfully increase the display space **423** in the text display portion **422.**

As typically shown in Fig. 3, the text display portion **422** with a small occupational area is not convenient for displaying, entering or editing a long sentence. So that in the present embodiment, the software keyboard portion **430** is made switchable to the small board **431** to thereby acquire a larger display space **423** which is convenient for displaying, entering and editing a long sentence.

In the present embodiment, the small board **431** contains as least necessary components the cursor **404,** send button **405,** board change button **418,** exit button **419** and page button **408.** When the small board **431** is displayed, for example the "upward" and "downward" keys out of the "upward", "downward", "leftward" and "rightward" keys on the controller 20 or infrared remote controller **40** are used as keys for scrolling upward or downward the displayed content in the text display portion **422,** which provides an interface different from that available when the software keyboard portion **430** is displayed. The "○" button serves as an item decision button in the small board **431.** In such exemplary case, the cursor **404** in the default state of such small board **431** points the board change button **418.**

Changing of the software keyboard portion **430** into the small board **431** in the present embodiment is also beneficial when a choice questionnaire **424** is to be displayed in the text display portion **422** in terms of displaying a larger number of questions and improving availability of the screen while hiding buttons unnecessary for answering the questionnaire. Such switching to the small board **431** for the case the selective questionnaire **424** is to be displayed is preferably done in an automatic manner, and the board change button **418** is preferably inactivated as being displayed, for example, in a gray-out state for the case of such automatic changing, so as to avoid accidental return by such board change button **418** from the small board **431** back to the software keyboard portion **430.**

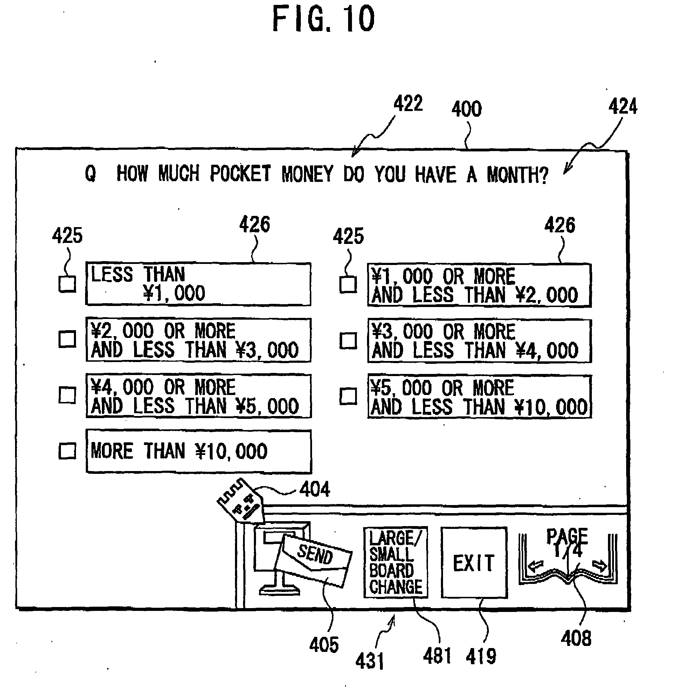

One possible example for the choice questionnaire **424** is shown in Fig. 10, in which a plurality of questionnaire items **426** and check mark portions **425** in which a check mark is given when the answer to the questionnaire item is "yes" are aligned. When such choice questionnaire **424** is displayed, the "upward", "downward", "leftward" and "rightward" directional keys provided on the controller **20** or infrared remote controller **40** are available as keys for moving over the questionnaire items **426** to be selected, and the "○" button is available as a button for entering or canceling the check mark given in the check mark portion **425.** In such exemplary case, the cursor **404** in the default state of such small board **431** points, for example, the upper left questionnaire item.

When such small board **431** is displayed, for example the "×" button provided on the controller **20** or infrared remote controller **40** is available as a button for toggling among the display modes shown in Figs. 9, 10 and 3.

### State-Dependent Display of Help

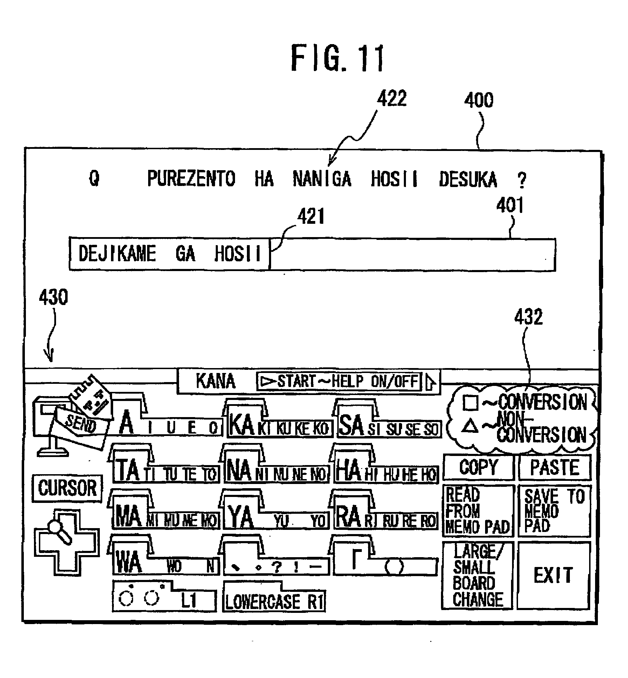

Besides explanation on the various buttons and functions thereof on the help board **433,** the present embodiment also provides explanation on functions assigned to the various buttons on the controller **20** or infrared remote controller **40** and questions directed to the user by displaying a help display portion **432** as shown in Fig. 11 depending on conditional changes for example in operation of the software keyboard portion **430** and character entry into the entry edit portion **401.**

Possible conditions for appearance and disappearance of such help display portion **432** are such as follows.

One condition for the appearance is such that the entry edit portion **401** has entered therein a pre-conversion kana text of three-characters long or more and such entry status is kept for 5 seconds, which results in display of the help display portion **432** containing "□ ∼ conversion" and "Δ ∼ non-conversion". On the other hand, a condition for the disappearance can be an absence of the pre-conversion text.

Another condition for the appearance is such that the copy button **415** is pointed by the cursor **404** and for example the "○" button is then pressed to thereby prompt copying, which results in display of the help display portion **432** containing a message of "Copying from where?". On the other hand, a condition for the disappearance can be pressing of the "○" button or "×" button. When the copying is canceled by pressing the "×" button, the copy button selection status is recovered.

Another condition for the appearance is such that the "○" button is pressed when the message of "Copying from where?" is displayed in the help display portion **432,** which results for example in display of the help display portion **432** containing a massage of "Copying up to where?". On the other hand, a condition for the disappearance of the help display portion **432** can be pressing of the "○" button or "×" button. Also when the copying is canceled by pressing the "×" button, the copy button selection status is recovered.

Another condition for the appearance is such that the paste button **416** is pointed by the cursor **404** and the "○" button is then pressed to thereby prompt pasting, which results in display of the help display portion **432** containing a message of "Where to paste?". On the other hand, a condition for the disappearance of the help display portion **432** can be pressing of the "○" button (i.e., decision making) or "×" button. When the copying is canceled by pressing the "×" button, a state of the paste button pointed by the cursor 404 is recovered.

Still another condition for the appearance is *kana* conversion of entered characters into the entry edit portion **401**, which results in display of the help display portion **432** containing a description of "**L1** (first left press button) ∼ - block adjustment" and **"L2** (second left press button) ∼ ← block adjustment", On the contrary, a condition for the disappearance of the help display portion **432** can be completion of such *kana* conversion.

Any of such help display portion **432** can preferably be associated with a predetermined animation display when it appears or disappears, or with a floating animation during the display (based on switched display of four textures, for example) to thereby make it properly distinctive. The display position of the help display portion **432** is preferably located so as not to interfere the character entering operation.

### Overall Constitution of Content-Distributional Application Program of Present Embodiment

Next paragraphs will describe constitution of the content-distributional application program capable of embodying the above processing.

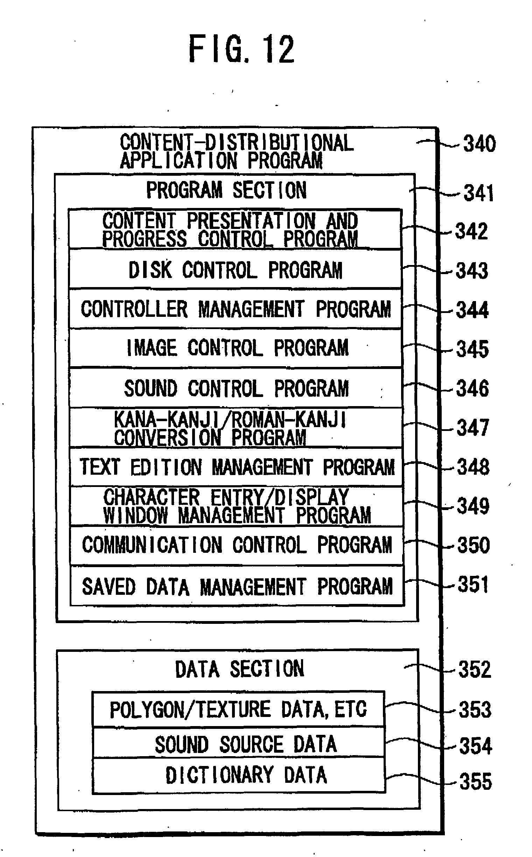

The application program according to the present embodiment is such that being stored in a recording medium such as DVD-ROM or CD-ROM, or being downloadable through a communication network, and has a data constitution as shown in Fig. 12. It is to be understood that the data constitution shown in Fig. 12 is not an actual one, but merely express a conceptional one comprising a program section and principal data section, where such program is contained in an application program having an information entry function by which a content is composed using content information sent from a server on a network and program read out by each entertainment device **1** from an optical disk, such composed content is displayed on a monitor screen together with the character entry/display window **400,** and character or other information is selected by the cursor **404** to thereby effect the information entry.

As shown in Fig. 12, the application program **340** of the present embodiment is roughly classified into a program section **341** which is executed by the main CPU **100** to thereby effect content display and information entry processing, and various data sections **352** used for such content display and information entry processing in the present embodiment.

The data section **352** includes at least polygon texture data, etc. **353,** sound source data **354** and dictionary data **355,** all of which are used when a content to be displayed on a monitor screen is composed.

The polygon texture data, etc. **353** is data for generating polygons or textures used for generating game figures, various objects and background image, all of which can appear in a content, and the character entry/display window **400.** The sound source data **354** is a waveform data used by the sound processor unit **140** when sound, music and effective sound to be broadcasted in a content are generated. The dictionary data **355** is a data necessary for converting entry made in kana or Roman characters into *kanji* when the character entry is made in the character entry/display window **400** as described in the above.

The program section **341** is a program for executing content display in the present embodiment, and comprises at least a content presentation and progress control program **342,** a disk control program **343,** a controller management program **344,** an image control program **345,** a sound control program **346,** a *kana-kanji*/Roman*-kanji* conversion program **347,** a text edition management program **348,** a character entry/display window management program **349,** a communication control program **350** and a saved data management program **351.**

The content presentation and progress control program **342** is a program for controlling progress of the content to be displayed on the foregoing monitor screen described in the above based on content information sent from the server. The disk control program **343** is a program for typically controlling reading-out of data, from an optical disk, corresponded to the content display or progress thereof according to the present embodiment, and the controller management program **344** is a program for managing signal entered from the controller **20** or infrared remote controller **40.** The image control program **345** is a program for generating content image of the present embodiment and for displaying such content image on the monitor screen, and the sound control program **346** is a program for generating and outputting content sound of the present embodiment.

The *kana-kanji*/Roman*-kanji* conversion program **347** is a program for converting kana or Roman character entered in the character entry/display window **400** into *kanji* as described in the above. The text edition management program **348** is a program for managing text editing such as copying or pasting of the text on the character entry/display window **400.** The character entry/display window management program **349** is a program for managing display and operation of the text display portion **422** in the character entry/display window **400,** software keyboard portion **430,** cursor **404,** and so forth. The communication control program **350** is a program for managing data communication with the server. The saved data management program **351** is a program for managing saved data such as performing saving of information to be saved out of content information sent from the server, reading-out of such saved data, and saving and read-out of data prepared by character entry to or from the memo pad.

### Process Flow of Information Entry Processing of the Present Embodiment

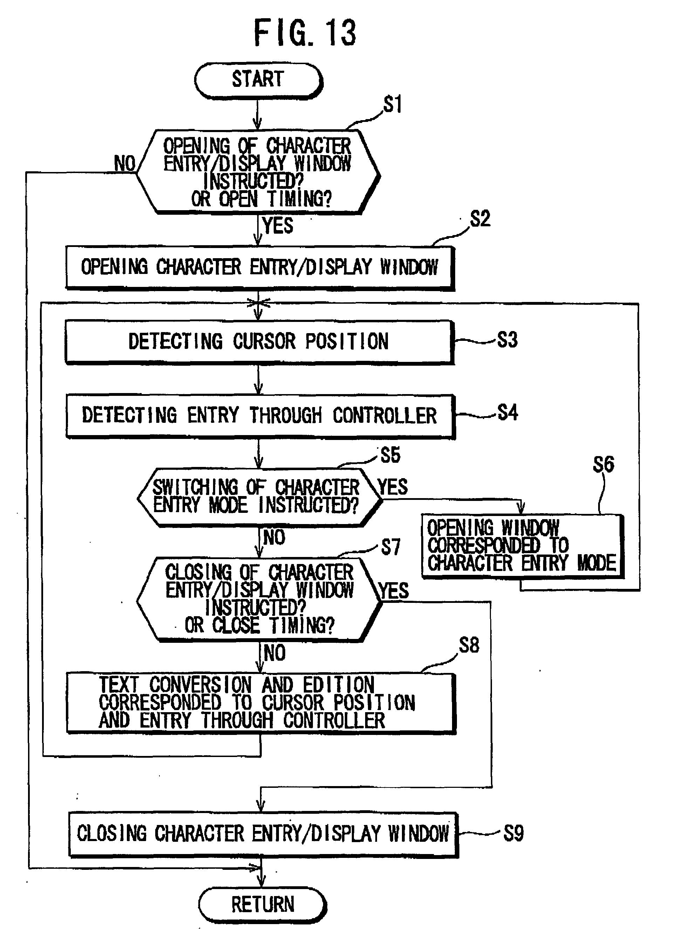

Of various processes in the content-distributional application program of the present embodiment shown in Fig. 12, those related to the character entry will be explained referring to Fig. 13 and successive drawings. The processes in the flow charts described below are accomplished by the respective program sections of the content-distributional application program of the present embodiment run on the CPU in the entertainment device **1** shown in Fig. 1, where each program sections are specifically responsible for such character entry.

### Entire Flow of Character Entry Processing

Fig. 13 shows an entire flow of the character entry based on the content-distributional application program **340** of the present embodiment.

During the progress of the content display program, the content presentation and progress control program **342** detects for example in step **S1** whether the time to open the character entry/display window **400** has come based on the content information sent from the server or has been instructed by the user, and upon detecting that such time to open the character entry/display window **400** has come or has been instructed by the user, the process is handed over to the character entry/display window management program **349** in step **S2,** to thereby display the foregoing character entry/display window **400** on the monitor screen. For the case that such time to open has not come or has not been instructed by the user, the content presentation and progress control program 342 sustains the current content display processing in progress.

When the character entry/display window **400** is displayed upon detection of the open timing or open instruction by the user in step **S1,** the character entry/display window management program **349** then detects in step **S3** the position (coordinate value) of the cursor **404** in such window **400,** and the controller management program **344** detects in step **S4** presence or absence of entry from the controller **20** or infrared remote controller **40,** and the buttons or keys responsible for such entry.

Next in step **S5,** the character entry/display window management program **349** detects presence or absence of user's instruction on switching the character entry modes of *kana*/*katakana*/alphabet/numeral & symbol (switch instruction through the select button **25)** based on the position of the cursor **404** and a controller entered signal detected by the controller management program **344.** If the instruction for changing the character entry mode is issued in step **S5,** the character entry/display window management program **349** then displays in step **S6** the character entry/display window **400** corresponded to the designated character entry/display mode, the process then returns to step **S3.**

When the process advances to step **S7** without detecting the changing instruction of the character entry/display mode in step **S5,** the character entry/display window management program **349** then detects whether the time to close the character entry/display window **400** has come based on the program information sent from the server or has been instructed by the user. Upon detecting in step **S7** that such time to close the character entry/display window **400** has come or has been instructed by the user, the process advances to step **S9** to thereby close the character entry/display window **400** on the monitor screen and is then handed over to the content presentation and progress control program **342,** and returns to the general program presentation processing.

On the other hand, when neither of the close timing nor close instruction by the user was detected in step **S7,** the character entry/display window management program **349** then performs in step **S8** text entry, text conversion or editing depending on the position of the cursor **404** and controller entered signal in collaboration with the *kana-kanji*/Roman*-kanji* conversion program **347,** text edition management program **348,** communication control program **350** and saved data management program **351.** Such processes from step **S3** to **S8** are repeated until the close timing or close instruction by the user is detected in step **S7.**

### Detailed Process Flow of Text Entry Button Processing

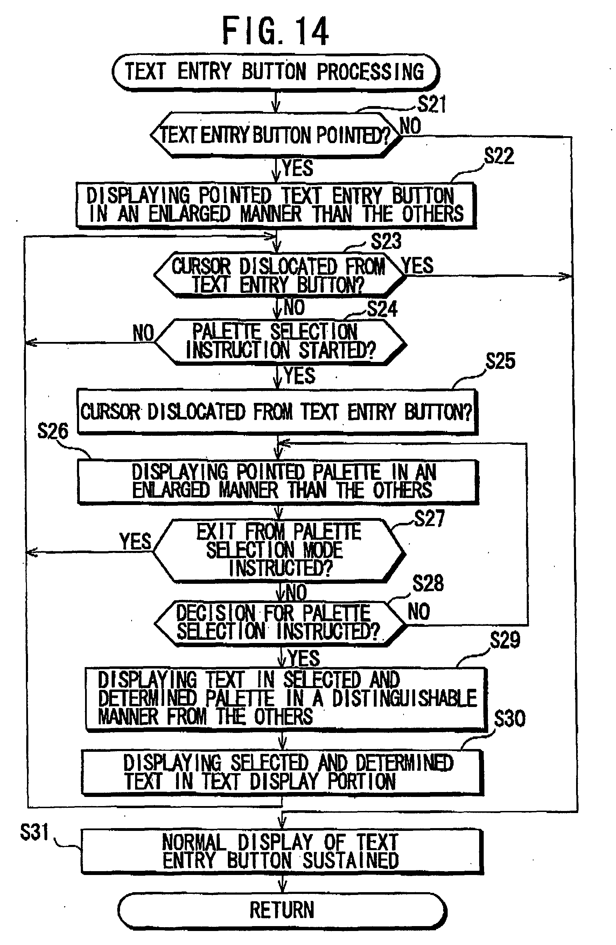

Fig. 14 shows a process flow effected by operating the text entry button **412** in the character entry/display window **400**, out of various processes for the text conversion and editing in step **S8** shown in Fig. 13.

In an exemplary case shown in Fig. 14, the character entry/display window management program **349** sets the group selection mode for the text entry button **412** at the point of time the process advances to step **S8,** and thus the individual text entry buttons **412** in such group selection mode are displayed in the normal size as shown in Fig. 5.

The character entry/display window management program **349** now detects in step **S21** which button out of these text entry buttons **412** is pointed based on the position of the cursor **404.** When no text entry button **412** was pointed, the character entry/display window management program **349** allows in step **S31** the individual text entry buttons **412** to be displayed in the normal size. On the other hand, when any of the text entry buttons **412** was found to be pointed by the cursor **404,** the character entry/display window management program **349** then displays in step **S22** such pointed text entry button **412** in an enlarged manner as shown in Fig. 6 in collaboration with the image control program **345.**

Next in step **S23,** the character entry/display window management program **349** detects whether the cursor **404** dislocated from the text entry button **412**, and if the dislocation was detected the process returns to step **S31** whereby the text entry button **412** is displayed in the normal size. On the other hand, if the cursor **404** was found to remain on the text entry button **412,** the character entry/display window management program **349** detects in step **S24** whether the operation of the directional keys or so has started in relation to the controller management program **344,** that is, whether the selection of the palette has started or not, and if the start of the selection was detected, the process transits to the palette selection mode in step **S25.**

After such transit to the palette selection mode, the character entry/display window management program **349** allows the pointed palette, out of the individual palettes of the text entry buttons **412,** to be displayed in a larger size as compared with the other palettes as shown in Fig. 7 in collaboration with the image control program **345.**

The character entry/display window management program **349** in the palette selection mode also judges in step **S27** whether exit from such palette selection mode was instructed by the user in relation to the controller management program **344** by typically pressing the "×" button, and also detects in step **S28** whether selection and definition of a palette was instructed by the user by typically pressing the "○" button.

If the exit was instructed by the user in step **S27,** the process exits the palette selection mode and returns to step **S23,** and if the instruction for the palette selection and definition has not been entered, the process returns to step **S26.**

On the other hand, when the selection and definition of the palette is instructed in step **S28,** the character entry/display window management program **349** displays in step **S29** a character in such selected and defined palette so as to be distinguishable from the other characters contained in the same palette as shown in Fig. 8, and then displays in step **S30** thus selected and defined character in the text display portion **401.**

Upon completion of step **S30,** the mode changes from the palette selection mode to group selection mode and the process returns to step **S23.**

### Detailed Process Flow of Entry Processing of Voiced Sound/P-Sound Mark

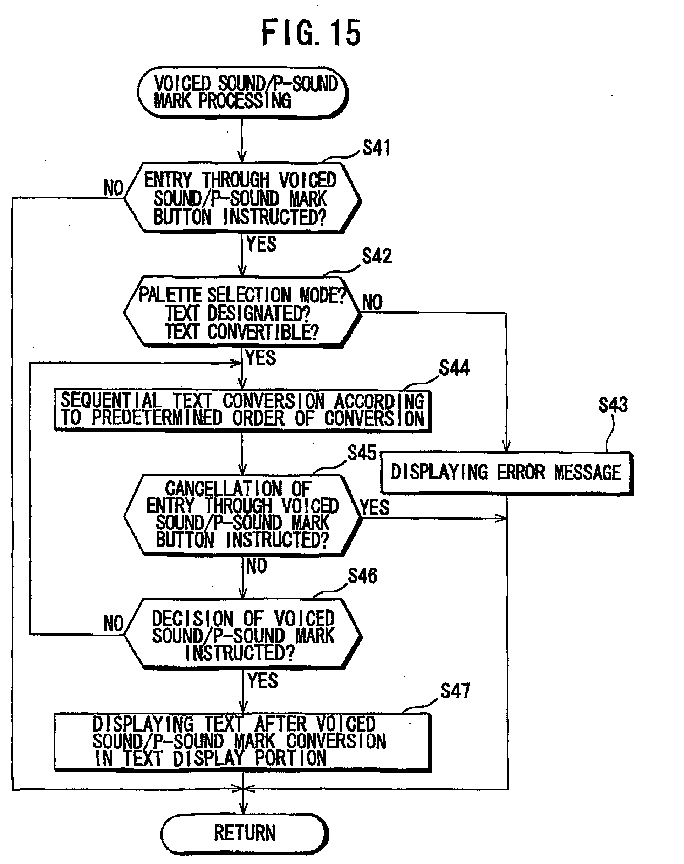

Fig. 15 shows a process flow effected by operating the voiced sound/p-sound mark button **413** in the character entry/display window **400,** out of various processes in step **S8** shown in Fig. 13.

In an exemplary case shown in Fig. 15, the character entry/display window management program **349** detects in step **S41** whether entry of a voiced sound/p-sound mark was instructed based on the position of the cursor **404** and through pressing the "○" button or the first left press button (L1), and upon detection of entered instruction through the voiced sound/p-sound mark button **413,** the process advances to step **S42.**

In step **S42,** the character entry/display window management program **349** detects whether any text entry button **412** is brought into palette selection mode, whether the undefined character is designated, and whether the designated character is a character attachable with the voiced sound/p-sound mark. If nothing applies in step **S42,** a predetermined error message is displayed on the monitor screen in step **S43** as described in the above, and when all apply, the process advances to step **S44.**

In step **S44,** the character entry/display window management program **349** converts such character to be converted into a character with a voiced sound mark and a character without the voiced sound mark in a toggled manner, or into a character with a voiced sound mark, a character with a p-sound mark and a character with no mark in a sequential manner.

At the same time with such conversion processing in step **S44,** the character entry/display window management program **349** judges in step **S45** in relation to the controller management program **344** whether the entry of the voiced sound/p-sound mark was canceled by the user through typically pressing the "×" button, and judges in step **S46** whether decision of the voiced sound/p-sound mark was instructed by the user through typically pressing the "○" button.

If the conversion processing was completed in step **S44,** entry cancellation through the voiced sound/p-sound mark button was not canceled in step **S45,** and decision of the voiced sound/p-sound mark was instructed in **S46,** the character entry/display window management program **349** displays in step **S47** a text after being processed by the voiced sound/p-sound conversion in the text display portion **401.**

### Detailed Process Flow of Lowercase Entry Processing

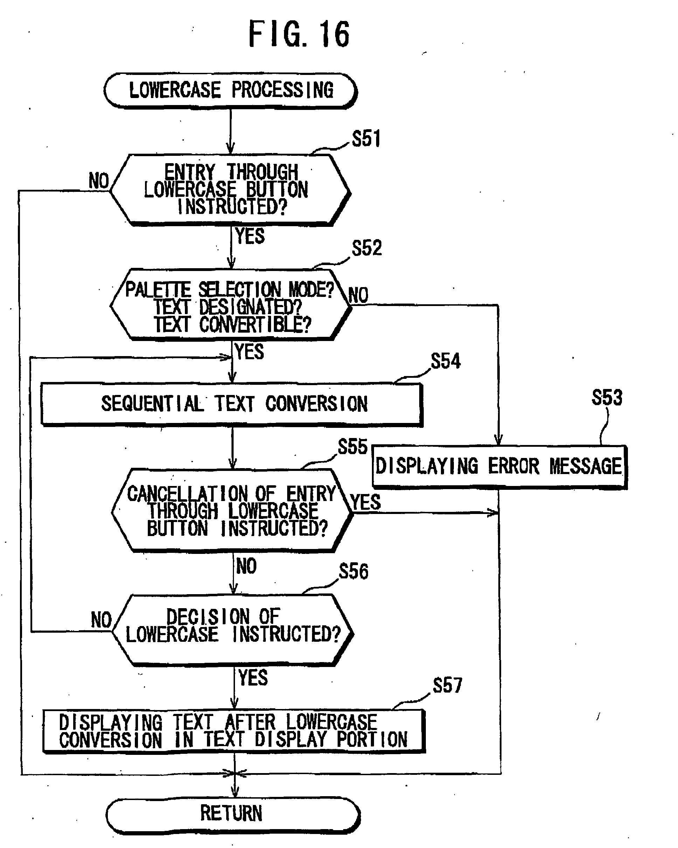

Fig. 16 shows a process flow effected by operating the lowercase button **414** in the character entry/display window **400,** out of various processes in step **S8** shown in Fig. 13.

In an exemplary case shown in Fig. 16, the character entry/display window management program **349** detects in step **S51** whether entry of a lowercase character was instructed based on the position of the cursor **404** and through pressing the "○" button, and upon detection of entered instruction through the lowercase button **414**, the process advances to step **S52.**

In step **S52,** the character entry/display window management program **349** detects whether any text entry button **412** is brought into palette selection mode, whether the undefined character is designated, and whether the designated character is a character convertible into the lowercase. If nothing applies in step **S52,** a predetermined error message is displayed on the monitor screen in step **S53** as described in the above, and when all apply, the process advances to step **S54.**

In step **S54,** the character entry/display window management program **349** converts such convertible character into the lowercase and the standard character in an alternative manner.

At the same time with such conversion processing in step **S54,** the character entry/display window management program **349** judges in step **S55** whether the entry of the lowercase character was canceled by the user through typically pressing the "×" button, and judges in step **S56** whether decision of the lowercase character was instructed by the user through typically pressing the "○" button.

If the conversion processing was completed in step **S54,** entry cancellation through the lowercase button was not canceled in step **S55,** and decision of the lowercase was instructed in **S56,** the character entry/display window management program **349** displays in step **S57** a text after being processed by the lowercase conversion in the text display portion **401.**

### Detailed Process Flow of Changing Large/Small Board

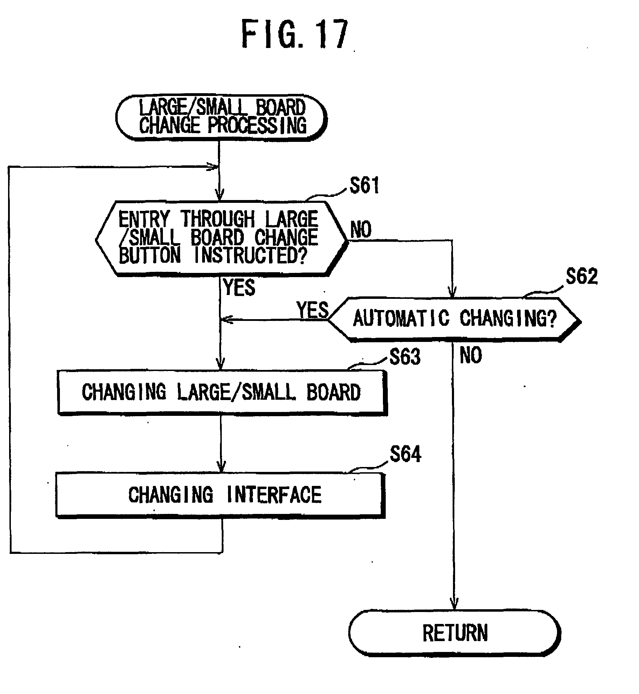

Fig. 17 shows a process flow effected by operating the large/small board change button **418** in the character entry/display window **400,** out of various processes in step **S8** shown in Fig. 13.

In an exemplary case shown in Fig. 17, the character entry/display window management program **349** detects in step **S61** whether changing of large/small board was instructed by the user based on the position of the cursor **404** and through pressing the "○" button, and upon detection of change instruction through the large/small board change button **418,** the process advances to step **S63.**

The character entry/display window management program **349** also detects whether it has instructed by the content information sent from the server that the time for automatic changing has come in order to display for example the choice questionnaire as shown in Fig. 10 when the changing of the large/small board is not instructed by the user. Also when the timing for such large/small board change was detected, the process advances to step **S63.**

In step **S63,** the character entry/display window management program **349** executes the large/small board change, and then in step **S64,** switches functions of virtual buttons (user interface) depending on the changed board.

### Detailed Process Flow of Display Processing of Help Display Portion

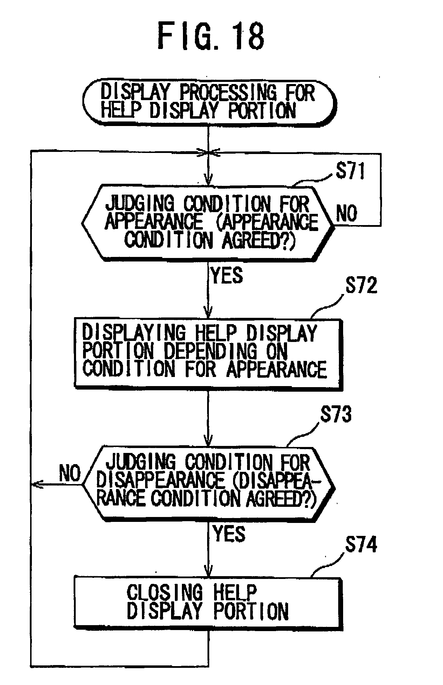

Fig. 18 shows a process flow for displaying the help display portion **432,** previously explained referring to Fig. 11, in the character entry/display window **400,** out of various processes in step **S8** shown in Fig. 13.

In an exemplary case shown in Fig. 18, the character entry/display window management program **349** judges in step **S71** the foregoing various conditions for the appearance of the help display portion **432** such as the position of the cursor **404,** entry from the controller, display on the text display portion **401** and character conversion; and displays in step **S72** such help display portion **432** corresponded to the agreed condition of the appearance.

Next, the character entry/display window management program **349** judges in step **S73** the foregoing various conditions for the disappearance of the help display portion **432** such as the position of the cursor **404,** entry from the controller, display on the text display portion **401** and character conversion; and closes in step **S74** such help display portion **432** corresponded to the agreed condition of the disappearance. After such step **S74,** the process returns to step **S71.**

As has been described in the above, according to the present embodiment, characters are preliminarily grouped by lines for example, so as to allow the user to select a desired character by first selecting a line containing such desired character through selecting the text entry button **412**, then selecting and defining a palette corresponded to such desired character from such selected line (text entry button **412**). This successfully improves time efficiency and operational efficiency in the text entry, and allows simple and rapid information entry.

Again according to the present embodiment, the individual text entry buttons **412** are aligned according to a predetermined rule (e.g., displaying the top character in a larger size, or simulating key arrangement of the mobile phone), so that the user can intuitively understand which button contains which character, which provides a user-friendly interface.

The embodiment described in the above is only part of the examples of the present invention. It is therefore to be understood that the present invention may be practiced in any modifications depending on the design or the like otherwise than as specifically described herein without departing from the scope and the technical spirit thereof.

For example, as has been described in the present embodiment, previously grouping the characters to be entered, and providing both of the modes for selecting group and for selecting character in the group is applicable to entry in any language besides Japanese. For example, entry of the alphabet can be based on a grouping, for example, by five characters, where the groups can be those containing "A" to "E", "F" to "J", "K" to "○" and so on. It is also allowable to group the characters according to the key arrangement on a so-called keyboard in terms of hardware (e.g., grouping by characters respectively entered by the individual fingers of left and right hands), which is supposed to improve operability for those skilled in entry through keyboard.

Information to be entered is not limited to characters, and may be other various information including symbols, pictures and image data. The present invention is also beneficial for selecting and entering such information. Moreover, for the case of applying the present invention to image entry, the function of a button for converting a selected characters into the lowercase, such as the lowercase button **414** in the software keyboard portion **430,** is also applicable to convert such image data shrunk into thumbnail image.

While the present embodiment dealt with the case in which the information entry method of the present invention is applied to entering of contribution sentence or answer sentence, the present invention is also applicable to entering of e-mail sentences or document preparation using a word processing software.

This application is related to Japanese Patent Application No. 2001-17687 filed on January 25, 2001, based on which this application claims priority under the Paris Convention and the content of which is incorporated herein by reference.

## Claims

1. An information entry method comprising the steps of:
displaying each of a plurality of groups, which respectively contains a plurality of information grouped according to a predetermined rule, so that each information contained in each group is recognizable;
making available a group selection mode allowing selection of the displayed group and a information selection mode allowing selection of information contained in the group;
displaying a group selected in the group selection mode so as to be distinguishable from other groups;
allowing the group selected in the group selection mode to transit to the information selection mode;
displaying an information selected from the group in the information selection mode so as to be distinguishable from other information;
setting the information selected in the information selection mode as a definable information; and
defining an entry of the information when a predetermined definitive instruction is issued in respect of the definable information.

2. The information entry method according to Claim 1, wherein each group is displayed so that a predetermined information contained therein is displayed in an enlarged manner as compared with the other information.

3. The information entry method according to Claim 1 or 2, wherein a group selected in the group selection mode is displayed in an enlarged manner as compared with the other groups.

4. The information entry method according to Claim 1, 2, or 3, wherein an information selected in the information selection mode is displayed in an enlarged manner as compared with the other information.

5. The information entry method according to Claim 1, 2, 3, or 4, wherein the selection processing of a group, and the selection processing of an information from the selected group are proceeded according to a predetermined selection instruction.

6. The information entry method according to Claim 1, 2, 3, 4, or 5, wherein the grouping according to the predetermined rule is a grouping by a certain number of information or a grouping by categories.

7. The information entry method according to Claim 1, 2, 3, 4, 5, or 6, further comprising a step of changing a state of information defined in the group from a pre-defined state to a predetermined state.

8. The information entry method according to Claim 1, 2, 3, 4, 5, 6, or 7, further comprising a step of:
converting a state of the definable information into a predetermined state; and
defining the converted information according to the predetermined definitive instruction.

9. The information entry method according to Claim 8, wherein the conversion processing into a predetermined state is a processing for adding a predetermined associate information to the definable information.

10. The information entry method according to Claim 9, wherein, for the case the information is given in a text, the addition processing of a predetermined associate information to the definable information is addition of voiced sound or p-sound mark to the text.

11. The information entry method according to Claim 8, wherein the conversion processing into a predetermined state is a processing for changing the size of the definable information.

12. The information entry method according to Claim 11, wherein, for the case the information is given in a text, the processing of changing the size of the definable information is changing the text into the lowercase.

13. An information entry device comprising:
a storage means for storing a plurality of information which is grouped to a plurality of groups according to a predetermined rule; and
a control means for controlling display of a group on a monitor screen, and for controlling, based on a display position on the monitor screen and a predetermined instruction entry, at least an operation in a group selection mode allowing selection of the displayed group and an operation in an information selection mode allowing selection of an information contained in the group;
wherein the control means displays each of a plurality of groups so that each information contained in each group is recognizable;
displays a group selected in the group selection mode so as to be distinguishable from other groups;
allows transition of the group selected in the group selection mode into the information selection mode;
displays an information selected from the group in the information selection mode so as to be distinguishable from other information;
sets the information selected in the information selection mode as a definable information; and
defines an entry of the information when a predetermined definitive instruction is issued in respect of the definable information.

14. The information entry device according to Claim 13, wherein the control means displays each group so that a predetermined information contained therein is displayed in an enlarged manner as compared with the other information.

15. The information entry device according to Claim 13 or 14, wherein the control means displays a group selected in the group selection mode in an enlarged manner as compared with the other groups.

16. The information entry device according to Claim 13, 14, or 15, wherein the control means displays an information selected in the information selection mode in an enlarged manner as compared with the other information.

17. The information entry device according to Claim 13, 14, 15, or 16, wherein the control means proceeds the selection processing of a group, and the selection processing of an information from the selected group according to a predetermined selection instruction.

18. The information entry device according to Claim 13, 14, 15, 16, or 17, wherein the grouping according to the predetermined rule is a grouping by a certain number of information or a grouping by categories.

19. The information entry device according to Claim 13, 14, 15, 16, 17, or 18, wherein the control means changes a state of information defined in the group from a pre-defined state to a predetermined state.

20. The information entry device according to Claim 13, 14, 15, 16, 17, 18, or 19, wherein the control means converts a state of the definable information into a predetermined state, and defines the converted information according to the predetermined definitive instruction.

21. The information entry device according to Claim 20, wherein the control means performs the conversion processing into a predetermined state by adding a predetermined associate information to the definable information

22. The information entry device according to Claim 21, wherein, for the case the information is given in a text, the control means performs the addition processing of a predetermined associate information to the definable information by adding voiced sound or p-sound mark to such text.

23. The information entry device according to Claim 20, wherein the control means performs the conversion processing into a predetermined state by changing the size of the definable information.

24. The information entry device according to Claim 23, wherein, for the case the information is given in a text, the control means performs the processing of changing the size of the definable information by changing the text into the lowercase.

25. A computer-readable recording medium having recorded therein an information entry program to be executed on a computer, wherein the information entry program comprises the steps of:
displaying each of a plurality of groups, which respectively contains a plurality of information grouped according to a predetermined rule, so that each information contained in each group is recognizable;
displaying a group, which was selected in a group selection mode for allowing selection of the displayed group, so as to be distinguishable from other groups;
allowing the group selected in the group selection mode to transit to the information selection mode for allowing selection of information contained in the group;
displaying an information selected from the group in the information selection mode so as to be distinguishable from other information;
setting the information selected in the information selection mode as a definable information; and
defining an entry of the information when a predetermined definitive instruction is issued in respect of the definable information.

26. The computer-readable recording medium having recorded therein an information entry program to be executed on a computer according to Claim 25, wherein the information entry program displays each group so that a predetermined information contained therein is displayed in an enlarged manner as compared with the other information.

27. The computer-readable recording medium having recorded therein an information entry program to be executed on a computer according to Claim 25 or 26, wherein the information entry program displays a group selected in the group selection mode in an enlarged manner as compared with the other groups.

28. The computer-readable recording medium having recorded therein an information entry program to be executed on a computer according to Claim 25, 26, or 27, wherein the information entry program displays an information selected in the information selection mode in an enlarged manner as compared with the other information.

29. The computer-readable recording medium having recorded therein an information entry program to be executed on a computer according to Claim 25, 26, 27, or 28, wherein the information entry program performs the selection processing of a group and the selection processing of an information from the selected group according to a predetermined selection instruction.

30. The computer-readable recording medium having recorded therein an information entry program to be executed on a computer according to Claim 25, 26, 27, 28, or 29, wherein the grouping according to the predetermined rule is a grouping by a certain number of information or a grouping by categories.

31. The computer-readable recording medium having recorded therein an information entry program to be executed on a computer according to Claim 25, 26, 27, 28, 29, or 30, wherein the information entry program further comprises a step of changing a state of information defined in the group from a pre-defined state to a predetermined state.

32. The computer-readable recording medium having recorded therein an information entry program to be executed on a computer according to Claim 25, 26, 27, 28, 29, 30, or 31, wherein the information entry program further comprises a step of:
converting a state of the definable information into a predetermined state; and
defining the converted information according to the predetermined definitive instruction.

33. The computer-readable recording medium having recorded therein an information entry program to be executed on a computer according to Claim 32, wherein the conversion processing into a predetermined state is a processing for adding a predetermined associate information to the definable information.

34. The computer-readable recording medium having recorded therein an information entry program to be executed on a computer according to Claim 33, wherein, for the case the information is given in a text, the addition processing of a predetermined associate information to the definable information is addition of voiced sound or p-sound mark to the text.

35. The computer-readable recording medium having recorded therein an information entry program to be executed on a computer according to Claim 32, wherein the conversion processing into a predetermined state is a processing for changing the size of the definable information.

36. The computer-readable recording medium having recorded therein an information entry program to be executed on a computer according to Claim 35, wherein, for the case the information is given in a text, the processing of changing the size of the definable information is changing the text into the lowercase.

37. A program execution device for executing an information entry program, wherein the information entry program comprises the steps of:
displaying each of a plurality of groups, which respectively contains a plurality of information grouped according to a predetermined rule, so that each information contained in each group is recognizable;
displaying a group, which was selected in a group selection mode for allowing selection of the displayed group, so as to be distinguishable from other groups;
allowing the group selected in the group selection mode to transit to the information selection mode for allowing selection of information contained in such group;
displaying an information selected from the group in the information selection mode so as to be distinguishable from other information;
setting the information selected in the information selection mode as a definable information; and
defining an entry of the information when a predetermined definitive instruction is issued in respect of the definable information.

38. The program execution device for executing an information entry program according to Claim 37, wherein the information entry program displays each group so that a predetermined information contained therein is displayed in an enlarged manner as compared with the other information.

39. The program execution device for executing an information entry program according to Claim 37 or 38, wherein the information entry program displays a group selected in the group selection mode in an enlarged manner as compared with the other groups.

40. The program execution device for executing an information entry program according to Claim 37, 38, or 39, wherein the information entry program displays an information selected in the information selection mode in an enlarged manner as compared with the other information.

41. The program execution device for executing an information entry program according to Claim 37, 38, 39, or 40, wherein the information entry program performs the selection processing of a group and the selection processing of an information from the selected group according to a predetermined selection instruction.

42. The program execution device for executing an information entry program according to Claim 37, 38, 39, 40, or 41, wherein the grouping according to the predetermined rule is a grouping by a certain number of information or a grouping by categories.

43. The program execution device for executing an information entry program according to Claim 37, 38, 39, 40, 41, or 42, wherein the information entry program further comprises a step of changing a state of information defined in the group from a pre-defined state to a predetermined state.

44. The program execution device for executing an information entry program according to Claim 37, 38, 39, 40, 41, 42, or 43, wherein the information entry program further comprises a step of:
converting a state of the definable information into a predetermined state; and
defining the converted information according to the predetermined definitive instruction.

45. The program execution device for executing an information entry program according to Claim 44, wherein the conversion processing into a predetermined state is a processing for adding a predetermined associate information to the definable information.

46. The program execution device for executing an information entry program according to Claim 45, wherein, for the case the information is given in a text, the addition processing of a predetermined associate information to the definable information is addition of voiced sound or p-sound mark to such text.

47. The program execution device for executing an information entry program according to Claim 44, wherein the conversion processing into a predetermined state is a processing for changing the size of the definable information.

48. The program execution device for executing an information entry program according to Claim 47, wherein, for the case the information is given in a text, the processing of changing the size of the definable information is changing the text into the lowercase.

49. An information entry program comprising the steps of:
displaying each of a plurality of groups, which respectively contains a plurality of information grouped according to a predetermined rule, so that each information contained in each group is recognizable;
displaying a group, which was selected in a group selection mode for allowing selection of the displayed group, so as to be distinguishable from other groups;
allowing the group selected in the group selection mode to transit to the information selection mode for allowing selection of information contained in such group;
displaying an information selected from the group in the information selection mode so as to be distinguishable from other information;
setting the information selected in the information selection mode as a definable information; and
defining an entry of the information when a predetermined definitive instruction is issued in respect of the definable information.
